Europäisches Patentamt

European Patent Office

Office européen des brevets

(19)

(11) Veröffentlichungsnummer : **0 150 313**
**B1**

(12) **EUROPÄISCHE PATENTSCHRIFT**

(45) Veröffentlichungstag der Patentschrift :
02.11.89

(21) Anmeldenummer : 84114242.5

(22) Anmeldetag : 26.11.84

(51) Int. Cl.⁴ : **B 23 B 31/00**

(54) Einrichtung zur Überwachung des Betriebszustandes eines Kraftspannfutters.

(30) Priorität : 28.01.84 DE 3402988

(43) Veröffentlichungstag der Anmeldung :
07.08.85 Patentblatt 85/32

(45) Bekanntmachung des Hinweises auf die Patenterteilung : 02.11.89 Patentblatt 89/44

(84) Benannte Vertragsstaaten :
DE FR GB IT SE

(56) Entgegenhaltungen :
AT--B-- 367 331
DE--A-- 2 846 337
DE--A-- 3 212 759
FR--A-- 2 366 104

(73) Patentinhaber : SMW Schneider & Weisshaupt GmbH
Wiesentalstrasse 28
D-7996 Meckenbeuren (DE)

(72) Erfinder : Hiestand, Karl, Ing.
Mühlweg 2
D-7798 Pfullendorf (DE)

(74) Vertreter : Engelhardt, Guido, Dipl.-Ing.
Patentanwalt Montafonstrasse 35 Postfach 1350
D-7990 Friedrichshafen 1 (DE)

## Beschreibung

Die Erfindung bezieht sich auf eine Einrichtung zur Überwachung des Betriebszustandes eines aus einem Futterkörper und in diesen in radial gerichteten Nuten verschiebbar geführten angetriebenen Spannbacken bestehenden Kraftspannfutters mit Hilfe durch Druckbeanspruchung erregbarer Signalgeber in Form von piezoelektrischen Elementen oder Dehnmeßstreifen, die zur Spannkraftmessung in zumindest einer elastisch verformbaren Zone z. B. eines Spannbackens oder Grundbackens angeordnet und mit außerhalb des Futterkörpers vorgesehenen Meßgeräten zur Auswertung der Signale elektrisch koppelbar sind.

Durch die DE-A-28 46 337 ist es bekannt, ein Spannfutter mit einer Einrichtung dieser Art zum Erfassen der Spannkraft in Abhängigkeit von auf die Spannelemente einwirkenden Kräften zu versehen. Zur Übertragung der von einem Sensor, der in einem Spannbacken angeordnet ist und die Kraft zwischen diesem und einem eingespannten Werkstück erfaßt, erzeugten Steuersignale zu einem Schleifring dient hierbei ein Kabel, das durch den Futterkörper hindurchgeführt ist. Da jedoch die Spannbacken oftmals ausgewechselt werden, ist ein Kabel, das jeweils erneut zu verlegen wäre, als Übertragungsmittel nicht praktikabel.

Aufgabe der Erfindung ist es daher, eine elektrische Verbindung zwischen einem auswechselbaren Bauteil und einem zugeordneten Träger oder zweier gegeneinander verstellbarer Bauteile des Kraftspannfutters zu schaffen, die stets, und zwar auch in unterschiedlichen Stellungen der Bauteile eine zuverlässige Signalübertragung gewährleistet, ohne daß besondere Vorkehrungen zu treffen sind und ohne daß ein großer Bauaufwand erforderlich ist. Durch Einsetzen eines Grundbackens in den Futterkörper oder Aufsetzen eines Spannbackens auf einen Grundbacken soll vielmehr die elektrische Verbindung betriebsbereit sein.

Gemäß der Erfindung wird dies dadurch erreicht, daß auch zur Überprüfung der Planlage eines Werkstückes in zumindest einer Anlagefläche eines Spannbackens piezoelektrische Elemente oder Dehnmeßstreifen angeordnet sind und daß zur elektrischen Verbindung eines auswechselbaren Bauteils mit dem zugeordneten Träger oder zweier gegeneinander verstellbarer Bauteile des Kraftspannfutters, beispielsweise zur Verbindung des Futterkörpers mit den in diesen eingesetzten Backen oder der Grundbacken mit den Aufsatzspannbacken, in eines dieser Bauteile jeweils eine sich in Verstellrichtung erstreckende Kontaktschiene und in das andere Bauteil ein mit dieser zusammenwirkender angefederter Kontaktstift eingesetzt sind, die elektrisch isoliert angeordnet und über vorzugsweise elastische Leitungen an die Signalgeber und an im Futterkörper des Kraftspannfutters eingesetzte mit den Meßgeräten elektrisch verbindbare Kontakte oder Kontakt- oder Schleifringe angeschlossen sind.

Zur elektrischen Verbindung der in dem Futterkörper angeordneten Kontaktstifte oder der Kontaktringe mit den Meßgeräten, vorzugsweise bei Stillstand des Kraftspannfutters, kann in einfacher Ausgestaltung ein in einem ortsfesten Bauteil verschiebbar gehaltenes Verstellglied vorgesehen werden, das mit den Kontaktstiften oder den Kontaktringen zusammenwirkende an die Meßgeräte angeschlossene Gegenkontakte aufweist.

Hierbei ist es zweckmäßig, als Verstellglied einen entgegen der Kraft einer Rückstellfeder achssenkrecht zu dem Futterkörper oder parallel zu dessen Längsachse verschiebbar in einem ortsfesten Halter geführten Verstellkolben vorzusehen, der in seinem äußeren Bereich eine von einem Druckmedium beaufschlagbare Druckfläche aufweist, wobei des weiteren die in dem Verstellglied eingesetzten Gegenkontakte jeweils durch einen in einer Hülse aus Isoliermaterial angeordneten angefederten Kontaktstift gebildet sein können.

Die gemäß der Erfindung ausgebildete Einrichtung zur Überwachung des Betriebszustandes eines Kraftspannfutters ist nicht nur einfach in der konstruktiven Ausgestaltung und somit auf wirtschaftliche Weise herzustellen, sondern auch äußerst betriebssicher und ermöglicht eine stets zuverlässige Übertragung der von einem Signalgeber erzeugten Signale von einem Bauteil auf ein anderes, ohne daß gesonderte elektrische Verbindungen herzustellen sind. Werden nämlich in einem der Bauteile jeweils eine Kontaktschiene und in dem anderen Bauteil ein mit dieser zusammenwirkender Bolzen eingesetzt, die an die Signalgeber und mit den Meßgeräten verbundenen Kontaktstiften oder dgl. angeschlossen sind, so ist es möglich, die elektrische Verbindung durch Einsetzen eines Bauteils herzustellen, und zwar auch in unterschiedlichen Höhenlagen, da ein Versatz mittels der Kontaktschiene problemlos auszugleichen ist. Die Übertragung elektrischer Signale ist somit zwangläufig gewährleistet, so daß bei einfacher Handhabung eine hohe Betriebssicherheit gegeben ist.

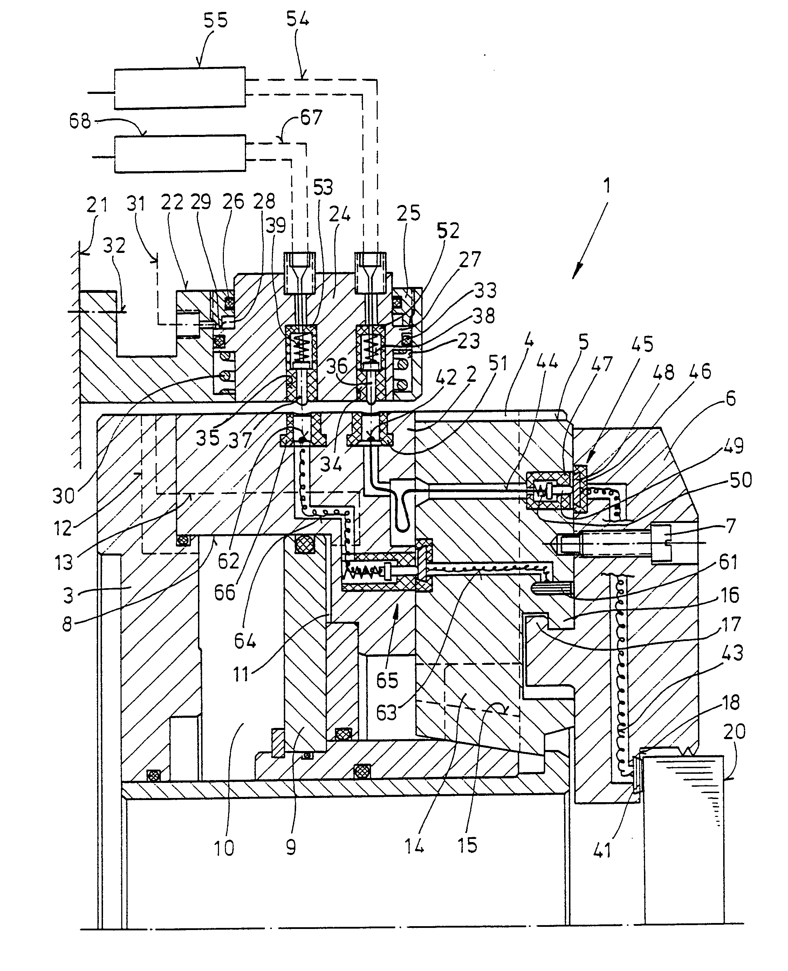

In der Zeichnung ist ein Ausführungsbeispiel eines Kraftspannfutters, das mit einer gemäß der Erfindung ausgebildeten Überwachungseinrichtung versehen ist, dargestellt und nachfolgend im einzelnen erläutert.

Das in der Zeichnung dargestellte und mit 1 bezeichnete Kraftspannfutter besteht im wesentlichen aus einem Futterkörper 2, der rückseitig durch einen Deckel 3 verschlossen ist, und in radial gerichteten Nuten 4 verschiebbar geführten Grundbacken 5, die mittels einer Nase 16 in eine in den Spannbacken 6 eingearbeitete Hinterschneidung 17 eingreifen. Mittels Schrauben 7 sind die Spannbacken 6 mit den Grundbacken 5 arretiert.

Die Grundbacken 5 sind durch einen in einem Zylinderraum 8 angeordneten Kolben 9 antreibbar, der über in an den Grundbacken 5 vorgesehenen Keilnuten 15 eingreifende Keilhaken 14 mit diesen formschlüssig verbunden ist. Wird über die strichpunktiert eingezeichneten Druckmittelzuführungsleitungen 12 oder 13 einem der Druckräume 10 oder 11 Druckmittel zugeführt und somit in diesen ein Druck aufgebaut, so wird der Kolben 9 nach rechts oder links verschoben. Und über die zusammenwirkenden Keilhaken 14 und Keilnuten 15 wird die Axialbewegung des Kolbens 9 in eine Radialbewegung umgelenkt, so daß die Spannbacken 6 nach außen oder innen verschoben und demnach ein Werkstück gelöst oder eingespannt wird.

Um feststellen zu können, ob ein einzuspannendes Werkstück 20 plan an den Anlageflächen 18 der Spannbacken 6 anliegt, ist in eine der Spannbacken 6 ein Signalgeber 41 in Form eines piezoelektrischen Elementes eingesetzt, das bei einer Druckbeanspruchung ein elektrisches Signal abgibt. Und da der Signalgeber 41 über eine in der Aufsatzspannbacke 6 angeordnete Leitung 43 sowie über eine in den Grundbacken 5 und den Futterkörper 2 eingesetzte Leitung 44 mit einem Kontakt 42 verbunden ist, der an ein Meßgerät 55 elektrisch anschließbar ist, ist anhand des Signals leicht erkennbar, ob eine exakte Anlage des Werkstückes 20 gewährleistet ist.

Des weiteren ist in den Grundbacken 5 im Bereich der Hinterschneidung 16, durch die somit eine elastisch verformbare Zone geschaffen ist, ein Signalgeber 61 angeordnet, der ebenfalls über durch eine elektrische Kupplung 65 miteinander verbundene Leitungen 63 und 64 an einen Kontakt 62 angeschlossen ist, der mit einem weiteren Meßgerät 68 verbindbar ist. Die Verformung der elastischen Zone der Grundbacke 5 stellt somit ein Maß für die jeweils auf das Werkstück 20 ausgeübte Spannkraft dar.

Die die Leitungen 43 und 44 bzw. 63 und 64 miteinander verbindenden elektrischen Kupplungen 45 bzw. 65 bestehen jeweils aus in einem der beiden aneinander-stoßenden Teile eingesetzten Kontaktschiene 48 und einem Kontaktstift 49, der durch die Kraft einer Feder 50 an die Kontaktschiene 48 gedrückt wird. Selbstverständlich sind die Kontaktschienen 48 sowie die Kontaktstifte 49 jeweils in Isolierstücken 46 bzw. 47 zu halten.

Um über die Leitungen 54 bzw. 67 die Meßgeräte 55 und 68 vorzugsweise bei Stillstand des Futterkörpers 2 elektrisch sicher mit den Signalgebern 41 und 61 zu verbinden, ist ein in einem Halter 22, der mittels Schrauben 32 an einer Wand 21 befestigt ist, in einer Bohrung 23 ein Verstellkolben 24 eingesetzt. Der Verstellkolben 24 ist mittels eines Ringes 25, in den eine Dichtung 26 eingesetzt ist, durch die Kraft einer Rückstellfeder 30 in der oberen Endlage gehalten. Wird jedoch vorzugsweise bei Stillstand des Kraftspannfutters 1 in einer vorgegebenen Position dem Druckraum 28 des Verstellkolbens 24 Druckmittel aus einer Zuführungsleitung 31 zugeleitet und wird somit dessen Druckfläche 29, die durch einen an diesem angeformten ringförmigen Ansatz 27, in den ebenfalls eine Dichtung 33 eingesetzt ist, gebildet ist, beaufschlagt, so wird der Verstellkolben 24 in Richtung des Kraftspannfutters 1 verschoben. Und da der Verstellkolben 24 mit durch Stifte 36 und 37, die in Hülsen 52 bzw. 53 aus Isoliermaterial gehalten sind, gebildete Gegenkontakte aufweist, ist durch die Verstellung des Verstellkolbens 24 leicht eine elektrische Verbindung herzustellen.

Die Hülsen 52 und 53 sind hierbei in in den Verstellkolben 24 eingearbeitete Bohrungen 34 und 35 eingesetzt, außerdem werden die Stifte 36 und 37 bei einer Ankoppelung jeweils durch die Kraft einer Feder 38 bzw. 39 gegen die Kontakte 42 bzw. 62, die ebenfalls in Hülsen 51 bzw. 66 aus Isoliermaterial eingesetzt sind, gedrückt, so daß eine sichere Übertragung der von den Signalgebern 41 und 61 erzeugten Signale gewährleistet ist.

## Patentansprüche

1. Einrichtung zur Überwachung des Betriebszustandes eines aus einem Futterkörper (2) und in diesen in radial gerichteten Nuten (4) verschiebbar geführten angetriebenen Spannbacken (6) bestehenden Kraftspannfutters (1) mit Hilfe durch Druckbeanspruchung erregbarer Signalgeber (41, 61) in Form von piezoelektrischen Elementen oder Dehnmeßstreifen, die zur Spannkraftmessung in zumindest einer elastisch verformbaren Zone (16) z. B. eines Spannbackens oder Grundbackens (5) angeordnet und mit außerhalb des Futterkörpers (2) vorgesehenen Meßgeräten (55, 68) zur Auswertung der Signale elektrisch koppelbar sind, dadurch gekennzeichnet, daß auch zur Überprüfung der Plananlage eines Werstückes (20) in zumindest einer Anlagefläche (18) eines Spannbackens (6) piezoelektrische Elemente oder Dehnmeßstreifen angeordnet sind und daß zur elektrischen Verbindung eines auswechselbaren Bauteils mit dem zugeordneten Träger oder zweier gegeneinander verstellbarer Bauteile des Kraftspannfutters (1), beispielsweise zur Verbindung des Futterkörpers (2) mit den in diesen eingesetzten Backen (Grundbacken (5)) oder der Grundbacken (5) mit den Aufsatzspannbacken (6), in eines dieser Bauteile (Spannbacken (6), Grundbacken (5)) jeweils eine sich in Verstellrichtung erstreckende Kontaktschiene (48) und in das andere Bauteil (Grundbacken (5), Futterkörper (2)) ein mit dieser zusammenwirkender angefederter Kontaktstift (49) eingesetzt sind, die elektrisch isoliert angeordnet und über vorzugsweise elastische Leitungen (43, 44, 63, 64) an die Signalgeber (41, 61) und an im Futterkörper (2) des Kraftspannfutters (1) eingesetzte mit den Meßgeräten (55, 68) elektrisch verbindbare Kontakte (42, 62) oder Kontakt- oder Schleifringe angeschlossen sind.

2. Einrichtung nach Anspruch 1, dadurch gekennzeichnet, daß zur elektrischen Verbindung der in dem Futterkörper (2) angeordneten Kontakte (42, 62) oder der Kontaktringe mit den Meßgeräten (55, 68) vorzugsweise bei Stillstand des Kraftspannfutters (1) ein in einem ortsfesten Bauteil (Halter (22)) verschiebbar gehaltenes Verstellglied (Verstellkolben (24)) vorgesehen ist, das mit den Kontakten (42, 62) oder den Kontaktringen zusammenwirkende an die Meßgeräte (55, 68) angeschlossene Gegenkontakte (Stifte (36, 37)) aufweist.

3. Einrichtung nach Anspruch 2, dadurch gekennzeichnet, daß das Verstellglied aus einem entgegen der Kraft einer Rückstellfeder (30) achssenkrecht zu dem Futterkörper (2) oder parallel zu dessen Längsachse verschiebbar in dem ortsfesten Halter (22) geführten Verstellkolben (24) besteht, der in seinem äußeren Bereich eine von einem Druckmedium beaufschlagbare Druckfläche (29) aufweist.

4. Einrichtung nach Anspruch 2 oder 3, dadurch gekennzeichnet, daß die in dem Verstellglied (Verstellkolben 24) eingesetzten Gegenkontakte (Stifte (36, 37)) jeweils durch einen in einer Hülse (53, 52) aus Isoliermaterial angeordneten angefederten Kontaktstiften gebildet sind.

## Claims

1. A device for monitoring the operation of a power chuck (1) comprising a chuck body (2) and driven clamping jaws (6) slidably received therein in radially disposed slots (4), by means of signal generators (41, 61) in the form of piezoelectric elements or foil type strain gauges excitable by pressure acting thereon, which for the purpose of measuring the clamping force are received in one or more elastically deformable zones (16) of e. g. one or more clamping jaws or primary jaws (5) and which for the evaluation of the signals are electrically connectable with measuring instruments (55, 68) provided outside the chuck body (2), characterised in that in order inter alia to check the flat abutment of a workpiece (20), piezoelectric elements or foil type strain gauges are received in one or more locating faces (18) of one or more clamping jaws (6) and that in order to provide an electrical connection between an interchangeable component and its associated carrier or between two components of the power chuck (1) movable relative to each other, for instance for the connection of the chuck body (2) with the jaws (primary jaws (5)) received therein or of the primary jaws (5) with the clamping jaws (6) mounted thereon, a contact rail (48) extending in the direction of movement is received in one of these components (clamping jaws (6), primary jaws (5)), and a spring-loaded contact pin (49) acting in cooperation with said contact rail (48) is received in the associated component (primary jaws (5), chuck body (2)), said contact rails (48) and contact pins (49) being arranged such that they are electrically insulated and connected via preferably elastic leads (43, 44, 63, 64) with the signal generators (41, 61) and with the contacts (42, 62), contact rings or slip rings which are received in the chuck body (2) of the power chuck (1) and electrically connectable with the measuring instruments (55, 68).

2. A device according to Claim 1, characterised in that for the electrical connection of the contacts (42, 62) or contact rings received in the chuck body (2) with the measuring instruments (55, 68), preferably when the power chuck (1) is at rest, a movable element (movable piston (24)) movably mounted in a fixed component (bracket (22)) is provided which has opposing contacts (pins (36, 37)) connected with the measuring instruments (55, 68) and acting in cooperation with the contacts (42, 62) or the contact rings.

3. A device according to Claim 2, characterised in that the movable element comprises a movable piston (24) mounted in the fixed bracket (22) and movable against the force of a return spring (30) perpendicularly to the axis of the chuck body (2) or in parallel with the longitudinal axis thereof, and having at its outer portion a pressure surface (29) against which pressure may be exerted by a pressure medium.

4. A device according to Claim 2 or 3, characterised in that the opposing contacts (pins (36, 37)) received in the movable element (movable piston 24) are each in the form of a spring-loaded contact pin received in a bush (53, 52) of insulating material.

## Revendications

1. Equipement de surveillance de l'état de service d'un mandrin de serrage automatique (1) comprenant un corps de mandrin (2) avec mors de serrage réglables (6) dans des gorges radiales (4) prévues dans le corps, à l'aide de transmetteurs de signal (41, 61) sous la forme d'éléments piézoélectriques ou de jauges extensométriques actionnés par pression, disposés pour la mesure de la force de serrage dans au moins une zone à déformation élastique (16) p. ex. d'un mors de serrage ou d'un mors de base (5) et qui permettent un couplage électrique aux appareils de mesure (55, 68) à l'extérieur du corps de mandrin (2) pour l'évaluation des signaux, caractérisé par le fait que des éléments piézoélectriques ou des jauges extensométriques sont prévus également en vue de la vérification de la portée plane d'une pièce à usiner (20) sur au moins une surface plane (18) d'un mors de serrage (6) et que, pour le couplage électrique d'un composant échangeable au support correspondant ou de deux composants réglables l'un par rapport à l'autre du mandrin de serrage automatique (1), p. ex. pour la connexion du corps de mandrin (2) avec les mors (mors de base) (5) insérés dans le corps ou des mors de base (5) avec les mors rapportés (6), il est monté dans un de ces composants (mors de serrage (6), mors de base (5)) une glissière de contact (48) orientée en direction du réglage et, dans l'autre composant (mors de base (5), corps du mandrin (2)), une pointe de contact (49) à ressort agissant en rapport avec la glissière, qui sont isolés électriquement et qui sont liés de préférence par des lignes élastiques (43, 44, 63, 64) aux transmetteurs de signal (41, 61) et aux contacts (42, 62) ou bagues de contact ou de friction montés dans le corps du mandrin (2) du mandrin de serrage automatique (1) et électriquement raccordables aux appareils de mesure (55, 68).

2. Equipement d'après la demande 1, caractérisé par le fait que pour le raccord électrique des contacts (42, 62) dans le corps du mandrin (2) ou des bagues de contact avec les appareils de mesure (55, 68) de préférence à l'arrêt du mandrin de serrage automatique (1), il est prévu dans une unité fixe (support (22)) un élément de réglage (piston de réglage (24)) coulissant, équipé de contre-contacts (pointes 36, 37) concourant avec les contacts (42, 62) ou les bagues de contact et raccordés aux appareils de mesure (55, 68).

3. Equipement d'après la demande 2, caractérisé par le fait que l'élément de réglage comprend un piston de réglage (24) se déplaçant dans un support fixe (22) contre la force d'un ressort de rappel (30) perpendiculairement au corps du mandrin (2) ou en direction parallèle à son axe longitudinal et qui, à l'extérieur, possède une surface de pression (29) sur laquelle agit un fluide de pression.

4. Equipement d'après les demandes 2 ou 3, caractérisé par le fait que les contre-contacts (pointes (36, 37)) dans l'élément de réglage (piston de réglage (24)) sont formés respectivement par une pointe de contact à ressort, disposé dans une douille (53, 52) en matériel isolant.